(19) Europäisches Patentamt / European Patent Office / Office européen des brevets

(11) **EP 3 976 880 B1**

(12) **EUROPEAN PATENT SPECIFICATION**

(45) Date of publication and mention
of the grant of the patent:
**03.01.2024  Bulletin 2024/01**

(21) Application number: **20732685.1**

(22) Date of filing: **26.05.2020**

(51) International Patent Classification (IPC):
$D21H\ 19/20^{(2006.01)}$   $D21H\ 27/10^{(2006.01)}$
$D21H\ 21/16^{(2006.01)}$   $C09D\ 129/04^{(2006.01)}$
$C09D\ 133/08^{(2006.01)}$   $C09D\ 133/10^{(2006.01)}$
$C09D\ 133/12^{(2006.01)}$

(52) Cooperative Patent Classification (CPC):
(C-Sets available)
**D21H 27/10; C08F 265/04; C08F 265/06;
C09D 4/06; C09D 151/003; D21H 19/20;
D21H 21/16**                             (Cont.)

(86) International application number:
**PCT/JP2020/020766**

(87) International publication number:
**WO 2020/241646 (03.12.2020 Gazette 2020/49)**

(54) **COATING MATERIAL**

BESCHICHTUNGSMATERIAL

MATÉRIAU DE REVÊTEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **30.05.2019   JP 2019101493**

(43) Date of publication of application:
**06.04.2022   Bulletin 2022/14**

(73) Proprietor: **Henkel AG & Co. KGaA
40589 Düsseldorf (DE)**

(72) Inventors:
• **YOSHIDA, Yoshio
Minoo-shi, Osaka 562-8586 (JP)**
• **FUJITA, Chiho
Minoo-shi, Osaka 562-8586 (JP)**

(56) References cited:
**JP-A- 2012 021 106**

(52) Cooperative Patent Classification (CPC): (Cont.)

C-Sets
**C08F 265/04, C08F 220/1804;**
**C08F 265/06, C08F 220/1804;**
**C09D 4/06, C08F 257/02;**
**C09D 4/06, C08F 261/04**

## Description

### Technical Field

The present invention relates to a coating material to be applied on a paper base material which is used for food packaging or the like.

### Background Art

Heretofore, processed papers such as a laminated paper, a greaseproof paper or the like have been used as food packaging materials. These laminated paper and greaseproof paper are subjected to a treatment to prevent strength reduction and contamination of hands from occurring due to oozing out of food-derived oil or the like.

The laminated paper is commonly obtainable by laminating a polyethylene film or the like on a paper material. With the growing environmental awareness, the laminated paper is required to be recycled these days. However, because of the film portion existing as an obstacle, a special device was required to efficiently recycle the laminated paper.

Meanwhile, a fluorine-based resin is often used as an oilproof agent in the greaseproof paper. It is hard to positively use the fluorine-based resin these days since an inert gas is generated by heating the resin and some components thereof exhibit ac-cumulativeness to the human body. However, the fluorine-based resin can develop the oil resistance even in the case of a small amount thereof to be applied on the paper material. In addition to the disadvantage in cost performance that results from using no fluorine-based resin, there is a need to increase the application amount when a substitute resin product for the fluorine-based resin is applied on the paper material. After the application, blocking sometimes occurred during winding the greaseproof paper. Therefore, there has been known a greaseproof paper on which a synthetic resin emulsion is applied, so as to simultaneously satisfy the oil resistance and the suitability for recycling.

Patent Document 1 discloses that an aqueous dispersion including a copolymer obtainable by copolymerizing a vinylaromatic monomer with a second monomer selected from butadiene and an alkyl (meth)acrylate is applied on a paper product as a barrier composition so as to prevent oil and bacteria from invading into the paper product ([claim 1], [0057] to [0060]). The water resistance of a paper base material coated with the barrier composition, the moisture vapor transmission rate of the paper base material, and the blocking resistance of the paper base material are improved ([0061] to [0067], [Fig. 1] to [Fig. 3]).

### Citation List

[Patent Literature]

[PTL 1] JP 2018-514597 A

[Summary of Invention]

[Technical Problem]

As the health-consciousness of consumers increases these days, paper materials used to package foods have been required to have higher levels of safety than ever before.

In Food and Drug Administration (hereinafter referred to as FDA), various standards are specified. Specifically, standards of paper in contact with foods containing fats and oils (FDA §176.170 Components of paper and paperboard in contact with aqueous and fatty foods.) are specified, and it is mentioned that a food packaging paper container is desirably made of a material conforming to the standards.

The barrier composition of Patent Document 1 is somewhat excellent in water resistance, oil resistance and blocking resistance, but it is hard to say that the barrier composition completely satisfies high safety standards of FDA. The barrier composition of Patent Document 1 has poor weatherability and sometimes underwent yellowing after being applied on a paper container. Discoloration of the food packaging container is a massive problem considering the safety required to foods.

When the food packaging container is a common paper cup, the end of the paper cup is formed by heating after applying the barrier composition. Therefore, the composition applied on the end of the paper cup is required to have heat-sealing properties.

The present invention has been made to solve the above problems and an object thereof is to provide a coating material to be applied on a food packaging container, which has excellent water resistance, oil resistance, weatherability and heat-sealing properties at a level required in the food industry and is safe for the human body and the environment; and a paper product obtainable by applying the coating material.

EP 3 976 880 B1

[Solution to Problem]

As a result of intensive study, the present inventors have found that a coating material comprising an aqueous emulsion obtainable by polymerizing a polymerizable unsaturated monomer comprising 95% by mass or more of a (meth)acrylic acid ester is excellent in water resistance, oil resistance, heat-sealing properties and weatherability, thus completing the present invention.

Namely, the disclosure of the present description includes the following embodiments.

1. A coating material comprising (B) an aqueous emulsion obtainable by polymerizing (b) a polymerizable unsaturated monomer in the presence of (A) a copolymer having a carboxyl group, wherein

the copolymer having a carboxyl group (A) has a chemical structure derived from a (meth)acrylic resin,
the polymerizable unsaturated monomer (b) is composed only of (b1) a (meth)acrylic acid ester, and
the copolymer having a carboxyl group (A) is blended in an amount of 10 to 50 parts by mass based on 100 parts by mass of the total mass of the polymerizable unsaturated monomer (b).

2. The coating material according to 1, wherein the copolymer having a carboxyl group (A) has an acid value of 100 to 300 mgKOH/g.
3. The coating material according to 1 or 2, wherein the copolymer having a carboxyl group (A) is blended in an amount of 25 to 40 parts by mass based on 100 parts by mass of the total mass of the polymerizable unsaturated monomer (b).
4. The coating material according to any one of 1 to 3, wherein the copolymer having a carboxyl group (A) is a polymer of a monomer mixture, and
the monomer mixture is a mixture composed mainly of at least one carboxylic acid derivative selected from carboxylic acid and a carboxylic acid ester.
5. The coating material according to any one of 1 to 4, wherein the aqueous emulsion (B) comprises a polymer having a glass transition temperature of 30°C or lower.
6. The coating material according to any one of 1 to 5, wherein the copolymer having a carboxyl group (A) exists together with polyvinyl alcohol.
7. The coating material according to any one of 1 to 6, which is applied on a surface of a paper.
8. A paper product comprising the coating material according to any one of 1 to 7 applied thereon.

[Advantageous Effects of Invention]

A coating material according to an embodiment of the present invention comprises (B) an aqueous emulsion obtainable by polymerizing (b) a polymerizable unsaturated monomer in the presence of (A) a copolymer having a carboxyl group, and the polymerizable unsaturated monomer (b) is composed only of the (meth)acrylic acid ester (b1).. Therefore, the coating material according to the embodiment of the present invention is more excellent in water resistance, oil resistance, weatherability and heat-sealing properties, and thus the coating material is more safe for the human body and the environment.

Since the coating material is applied thereon, the paper product according to the embodiment of the present invention is highly resistant to moisture and oil, and does not undergo yellowing, and also no deterioration occurs even when subjected to a heat treatment, and thus the paper product is more preferable as a food packaging container.

[Description of Embodiments]

A coating material according to an embodiment of the present invention comprises (B) an aqueous emulsion obtainable by polymerizing (b) a polymerizable unsaturated monomer in the presence of (A) a copolymer having a carboxyl group. The polymerizable unsaturated monomer (b) includes 95 parts by mass or more of (b1) a (meth)acrylic acid ester in 100 parts by mass of the total mass.

When the content of the (meth)acrylic acid ester (b1) of the coating material according to the embodiment of the present invention is less than 95 parts by mass, any one of the water resistance, the oil resistance, the heat-sealing properties and the weatherability deteriorates, thus failing to satisfy high safety required to a food packaging container.

<(A) Copolymer having a carboxyl group)>

In the embodiment of the present invention, the copolymer having a carboxyl group (A) is a copolymer which acts as a stabilizer when the polymerizable unsaturated monomer (b) is polymerized to prepare (B) an aqueous emulsion and has a carboxyl group (and/or a base thereof), and is not particularly limited as long as the objective aqueous emulsion of the present invention can be obtainable. The copolymer having a carboxyl group (A) also has, in addition to the carboxyl group, a base corresponding thereto. By using the copolymer having a carboxyl group (A), it is possible to produce the aqueous emulsion (B).

The copolymer having a carboxyl group (A) has a chemical structure derived from a (meth)acrylic resin. The (meth)acrylic resin is a synthetic resin having a carboxyl group which is obtainable by polymerizing at least one selected from (meth)acrylic acid (and/or a base thereof) and a (meth)acrylic acid ester.

As long as no adverse effect is exerted on the coating material according to the embodiment of the present invention, the copolymer having a carboxyl group (A) may be a copolymer of (meth)acrylic acid and a (meth)acrylic acid ester with other monomer(s). Examples of the other monomer(s) include styrene, olefins and the like. The copolymer having a carboxyl group (A) is a synthetic resin having a carboxyl group which is obtainable by polymerizing at least one selected from (meth)acrylic acid and a (meth)acrylic acid ester.

The component (A) is blended in an amount of 10 to 50 parts by mass, preferably 20 to 40 parts by mass, and most preferably 25 to 40 parts by mass, based on 100 parts by mass of the total mass of the polymerizable unsaturated monomer (b).

When the amount of the component (A) is within the above range, particles (solid component) of the aqueous emulsion (B) can be more stably dispersed in the aqueous medium. When the dispersion of the aqueous emulsion (B) becomes stable, the coating material according to the embodiment of the present invention is more excellent in stability and water resistance.

An acid value of the copolymer having a carboxyl group (A) according to the embodiment of the present invention is preferably 100 to 300 mgKOH/g, more preferably 150 to 250 mgKOH/g, particularly preferably 180 to 220 mgKOH/g, and most preferably 190 to 210 mgKOH/g. When the acid value of the copolymer having a carboxyl group is within the above range, the water resistance of the coating material is more improved.

The "acid value" of the copolymer having a carboxyl group (A) according to the embodiment of the present invention is represented by a calculated value of a number of milligrams of potassium hydroxide required to neutralize an acid assuming that all of acid groups included in 1 g of the copolymer are liberated as acids. Therefore, even if existing as a base in the system, it is considered as the liberated acid.

This corresponds to an acid group possessed by monomers serving as raw materials of the copolymer having a carboxyl group (hereinafter referred to as "raw monomer"). In the embodiment of the present invention, the "acid value" can be determined by the following formula (1).

Formula (1):

Acid value = ((parts by mass of raw monomer/molecular weight of raw monomer) × number of mols of acid group included in 1 mol of raw monomer × formula weight of KOH × 1,000/parts by mass of copolymer having a carboxyl group (A))

In the embodiment of the present invention, the copolymer having a carboxyl group (A) preferably exists together with a polyvinyl alcohol. When the component (A) coexists with a polyvinyl alcohol, the polymer of the (meth)acrylic acid ester (b1) becomes more stable and the dispersion of the solid component of the aqueous emulsion (B) becomes more stable. Furthermore, when the component (A) of the coating material according to the embodiment of the present invention coexists with a polyvinyl alcohol, the coating material is more excellent in heat-sealing properties.

<(B) Aqueous Emulsion>

In the embodiment of the present invention, the aqueous emulsion (B) can be obtainable by polymerizing (b) a polymerizable unsaturated monomer in the presence of the copolymer having a carboxyl group (A).

In the embodiment of the present invention, "(b) a polymerizable unsaturated monomer" refers to a radical polymerizable monomer having an ethylenic double bond.

In the present description, the "ethylenic double bond" refers to a double bond between carbon atoms, capable of performing a polymerization reaction (radical polymerization). Examples of functional groups having such an ethylenic double bond include a vinyl group ($CH_2$ =CH-), a (meth)allyl group ($CH_2$ =CH-$CH_2$ - and $CH_2$ =C($CH_3$)-$CH_2$ -), a (meth)acryloyloxy group ($CH_2$ =CH-COO- and $CH_2$ =C($CH_3$ )-COO-), a (meth)acryloyloxyalkyl group ($CH_2$ =CH-COO-R- and $CH_2$ =C($CH_3$)-COO-R-), -COO-CH=CH-COO- and the like.

In the present description, the "(meth)acrylic acid" indicates both acrylic acid and methacrylic acid, and means including at least one of acrylic acid and methacrylic acid.

The "(meth)acrylic acid ester" refers to an ester of (meth)acrylic acid, that is, (meth)acrylate. The (meth)acrylate indicates both acrylate and methacrylate, and means including at least one of the acrylate and the methacrylate. A vinyl ester having a structure in which a vinyl group and oxygen are bonded, for example, vinyl acetate is not included in the (meth)acrylate in the present description.

Specific examples of the (meth)acrylate include (meth)acrylic acid alkyl esters such as methyl (meth)acrylate, ethyl (meth)acrylate, propyl (meth)acrylate, isopropyl (meth)acrylate, butyl (meth)acrylate, 2-ethylhexyl (meth)acrylate, pentyl (meth)acrylate, hexyl (meth)acrylate, cyclohexyl (meth)acrylate, octyl (meth)acrylate, decyl (meth)acrylate, dodecyl (meth)acrylate, tridecyl (meth)acrylate, octadecyl (meth)acrylate, behenyl (meth)acrylate and docosyl (meth)acrylate; and

(meth)acrylic acid hydroxyalkyl esters such as 2-hydroxyethyl (meth)acrylate, 2-hydroxybutyl (meth)acrylate and 2-hydroxypropyl (meth)acrylate.

These (meth)acrylates can be used alone, or two or more (meth)acrylates can be used in combination.

In the embodiment of the present invention, the (meth)acrylic acid ester is preferably a (meth)acrylic acid alkyl ester. More specifically, methyl (meth)acrylate, butyl (meth)acrylate and 2-ethylhexyl (meth)acrylate are preferably included, and n-butyl acrylate or 2-ethylhexyl acrylate is particularly preferably included. Homopolymers of n-butyl acrylate and 2-ethylhexyl acrylate have a low glass transition temperature (hereinafter referred to as a Tg).

The copolymer included in the aqueous emulsion (B) is preferably obtainable by polymerizing n-butyl acrylate or 2-ethylhexyl acrylate with other monomer(s). In this case, a Tg of the copolymer can be adjusted to a low temperature, thus enabling an improvement in water resistance of the coating material.

The polymerizable unsaturated monomer (b) is composed only of (b1) a (meth)acrylic acid ester.

When the polymerizable unsaturated monomer (b) is composed only of the (meth)acrylic acid ester (b1), the coating material according to the embodiment of the present invention does not have a structure derived from a polymer of the other monomer(s) (b2), and thus the coating material is more excellent in weatherability.

Here, "composed only of the (meth)acrylic acid ester (b1)" refers to 'substantially composed only of the (meth)acrylic acid ester (b1)' and a trace amount of other polymerizable unsaturated monomer(s) included inevitably in (b1) may be included, thereby, inclusion of the other polymerizable unsaturated monomer(s) is not excluded as long as a substantial influence is not exerted on the coating material according to the embodiment of the present invention.

The copolymer of the polymerizable unsaturated monomer (b) included in the aqueous emulsion (B) preferably has a glass transition temperature (Tg) of 30°C or lower, particularly preferably -60°C to 15°C, more preferably -60°C to 0°C, and most preferably -60°C to -20°C.

When the Tg of the copolymer is within the above range, the coating material according to the embodiment of the present invention is more excellent in water resistance.

In the present description, the glass transition temperature of the copolymer of the polymerizable unsaturated monomer (b) included in the aqueous emulsion (B) is calculated from a glass transition temperature of a homopolymer obtainable by homopolymerizing the polymerizable unsaturated monomer (b) serving as a raw material of the copolymer (hereinafter also referred to as a "homopolymer Tg").

Considering this homopolymer Tg and a mixing ratio (parts by mass) of each polymerizable unsaturated monomer (monomer) (b), the Tg of the copolymer is calculated. Specifically, the Tg of the copolymer can be determined by calculating using the following formula (2):

$$\text{Formula (2):}$$
$$1/Tg = C_1/Tg_1 + C_2/Tg_2 + \cdots + C_n/Tg_n$$

where, in the formula (2), Tg is a theoretical Tg of a copolymer, $C_n$ is mass percentage of the nth monomer n included in a monomer mixture, $Tg_n$ is a homopolymer Tg of the nth monomer n, and n is the number of monomers constituting the copolymer and is a positive integer.

It is possible to use, as the homopolymer Tg, a value mentioned in a literature. The literature includes, for example, "POLYMER HANDBOOK" (4th edition; published by John Wiley & Sons, Inc.). As an example, homopolymer Tgs of monomers mentioned in POLYMER HANDBOOK are shown below.

Methyl methacrylate ("MMA", Tg = 105°C)
n-Butyl acrylate ("n-BA", Tg = -54°C)
2-Ethylhexyl acrylate ("2EHA", Tg = -70°C)
Styrene ("St", Tg = 100°C)
Acrylic acid ("AA", Tg = 106°C)
Methacrylic acid ("MAA", Tg = 130°C)
n-Butyl methacrylate ("BMA", Tg = 20°C)

In the present description, it is possible to apply, in addition to the Tgs of the homopolymers obtainable by homopolymerizing the above monomers, glass transition temperatures (Tgs) of homopolymers obtainable by homopolymerizing other monomers to the formula (2).

In the embodiment of the present invention, the aqueous emulsion (B) preferably includes a copolymer obtainable by polymerizing at least one of n-butyl acrylate and 2-ethylhexyl acrylate. When the copolymer includes the above components, the Tg is easily adjusted to 30°C or lower, thus enabling further improvement in water resistance of the coating material according to the embodiment of the present invention.

In the embodiment of the present invention, the solid component concentration of the aqueous emulsion (B) is not particularly limited, but is preferably 5 to 70% by mass. The solid component of the emulsion refers to a solid component obtainable by drying the emulsion at 105°C for 3 hours.

The aqueous emulsion (B) according to the embodiment of the present invention is preferably obtainable by emulsion polymerization of a plurality of (b) polymerizable unsaturated monomers (monomers). The emulsion polymerization is radical polymerization performed in water or an aqueous medium by use of an emulsifier, and a known method can be used.

The emulsifier promotes particle dispersion stability by being fixed on a surface of polymer particles during or after polymerization. Examples of the emulsifier include anionic surfactants, nonionic surfactants, cationic surfactants, amphoteric surfactants, polymer surfactants and the like.

To improve the water resistance, the alkali resistance and the waterproof property, it is preferable to use a "reactive surfactant" having a radically polymerizable double bond in one molecule of the emulsifier.

The aqueous emulsion (B) according to the embodiment of the present invention is preferably obtainable by emulsion polymerization of a plurality of monomers in a state where a stabilizer (e.g., a polymer having a carboxyl group, a polymer having a hydroxyl group or the like) exists in an aqueous medium.

The stabilizer has an effect of stabilizing a solid component of the emulsion in the aqueous medium to disperse the solid component and, in the embodiment of the present invention, (A) the copolymer having a carboxyl group is preferable.

Herein, the "aqueous medium" means common water such as tap water, distilled water or ion-exchanged water, but may include an organic solvent which is soluble or dispersible in the aqueous medium and has poor reactivity with raw materials of the copolymer according to the embodiment of the present invention, for example, acetone and ethyl acetate, and may further include monomers, oligomers, prepolymers and/or resins which are soluble in the aqueous medium. As mentioned later, the aqueous medium may include emulsifiers, polymerizable emulsifiers, polymerization reaction initiators, chain extenders and/or various additives which are commonly used for the production of a water-based resin or a water-soluble resin.

It is possible to exemplify, as one preferred embodiment of the coating material according to the embodiment of the present invention,

> a coating material comprising (B) an aqueous emulsion obtainable by polymerizing (b) a polymerizable unsaturated monomer in the presence of (A) a copolymer having a carboxyl group, wherein
> the polymerizable unsaturated monomer (b) is composed only of (b1) a (meth)acrylic acid ester,
> the copolymer having a carboxyl group (A) is a polymer of a monomer mixture composed only of a polymerizable unsaturated monomer having a carboxyl group and a (meth)acrylic acid ester, and
> the copolymer having a carboxyl group (A) coexists with polyvinyl alcohol.

In the coating material according to the embodiment of the present invention, when the component (A) and the component (B) are in the above embodiment, the weatherability and the heat-sealing properties are more improved and are more excellent.

The coating material according to the embodiment of the present invention comprises (B) an aqueous emulsion and includes, as a stabilizer, (A) a copolymer having a carboxyl group, and may further include, as additives, a crosslinking agent, a viscosity modifier, a plasticizer, a defoamer, a preservative, a colorant and the like. These additives may be blended after synthesizing the aqueous emulsion (B), or may be blended with monomers serving as raw materials of the aqueous emulsion (B), or may be added to the coating material in an emulsion form. Those mentioned in the aqueous emulsion (B) can be referred to the coating material in an emulsion form according to the embodiment of the present invention.

Examples of the crosslinking agent include zinc acetate, zinc oxide, zirconium acetate, zirconium ammonium carbonate and the like. These crosslinking agents can be used alone or in combination.

Examples of the viscosity modifier include nitrogen-containing substances such as urea, urea compound and dicyandiamide; calcium hydroxide, calcium oxide, sodium carbonate, trisodium phosphate, diammonium hydrogen phosphate, borax, sodium fluoride, water glass, ammonia water and the like.

Examples of the plasticizer include glycerin; polyhydric alcohols such as ethylene glycol and propylene glycol;

saccharides such as sucrose and sorbitol; and organic solvents such as cellosolves.

Examples of the antifoaming agent include:

silicone-based antifoaming agents such as dimethylpolysiloxane, polyoxyalkylene-modified silicones, organic modified polysiloxanes and fluorine silicones;

oils and fats-based antifoaming agents such as castor oil, sesame oil, linseed oil, and animal and plant oils;

fatty acid-based antifoaming agents such as stearic acid, oleic acid and palmitic acid;

fatty acid ester-based antifoaming agents such as isoamyl stearate, diglycollauric acid, distearylsuccinic acid, distearic acid, sorbitanmonolauric acid, glycerin fatty acid esters, polyoxyethylene sorbitan, butyl stearate monolaurate, sucrose fatty acid esters, ethyl acetate alkyl esters of sulfonated ricinoleic acid, and natural waxes;

alcohol-based antifoaming agents such as polyoxyalkylene glycol and derivatives thereof, polyoxyalkylene alcohol hydrate, diamylphenoxy ethanol, 3-heptanol and 2-ethylhexanol;

ether-based antifoaming agents such as 3-heptylcellosolve and nonylcellosolve-3-heptylcarbitol;

phosphate ester-based antifoaming agents such as tributyl phosphate, sodium octyl phosphate and tris(butoxyethyl)phosphate;

amine-based antifoaming agents such as diamyl amine;

amide based antifoaming agents such as polyalkyleneamide, acylate polyamine and dioctadecanoyl piperidine;

metal soap-based antifoaming agents such as aluminum stearate, calcium stearate, potassium oleate, and calcium salts of wool olein; and

sulfonate ester-based antifoaming agents such as sodium lauryl sulfonate and sodium dodecyl sulfonate.

The coating material according to the embodiment of the present invention can be applied on a surface of a paper material which is used for food packaging or the like. The coating material according to the embodiment of the present invention has water resistance, oil resistance, weatherability and heat-sealing properties. A paper product on which the coating material according to the embodiment of the present invention is applied is highly resistant to oil, and does not undergo yellowing and thermal denaturation, and thus the paper product is suitably used as a food packaging container.

The paper product according to the embodiment of the present invention is more excellent in water resistance and therefore can be used for, in addition to food packaging containers, paper straws, toilet papers, paper cups and the like.

[Examples]

The present invention will be described below by way of Examples and Comparative Examples. It should be noted that these Examples are intended to describe the present invention and the present invention is not limited thereto. In Examples, unless otherwise specified, parts by mass and percentages by mass are based on the portions where a solvent is not taken into consideration.

Using (A) a copolymer having a carboxyl group which is a stabilizer, and (A') polyvinyl alcohol and (b) a polymerizable unsaturated monomer, (B) an aqueous emulsion was prepared to obtain a coating material.

Using the following components according to the formulation shown in Table 1, coating materials of Examples 1 to 6 and Comparative Examples 1 to 4 were produced. The details of the components (A) and (b) are shown below.

(A) Copolymer having a carboxyl group (stabilizer)

(A1) Copolymer having a chemical structure derived from a polymer of a styrene monomer (JONCRYL679 (trade name), manufactured by BASF Japan Ltd.)

(A2) Copolymer having no chemical structure derived from a polymer of a styrene monomer (SOLURYL 840 (trade name), manufactured by Hanwha Chemical Corporation)

(A'3) Polymer having a hydroxyl group (EXCEVAL RS2713 (trade name), manufactured by KURARAY CO., LTD.)

(b) Polymerizable unsaturated monomer

(b1) (Meth)acrylic acid ester
(b1-1) Butyl acrylate (n-butyl acrylate)
(b1-2) 2-Ethylhexyl acrylate

(b1-3) Methyl methacrylate
(b1-4) Ethyl acrylate
(b2) Other monomers
(b2-1) Styrene

[Table 1]

| Example | | 1 | 2 | 3 | 4 | 5 | 6* |
|---|---|---|---|---|---|---|---|
| (A) | (A1) | | | | | 30 | |
| | (A2) | 30 | 30 | 30 | 30 | | 30 |
| | (A'3) | 1.8 | 1.8 | 1.8 | | | |
| | | | | | | | |
| (b1) | (b1-1) | 25 | 20 | 42 | 42 | 20 | 42 |
| | (b1-2) | 30 | 48 | 48 | 48 | 48 | 42 |
| | (b1-3) | 20 | 32 | 10 | 10 | 32 | 10 |
| | (b1-4) | 25 | | | | | |
| (b2) | (b2-1) | | | | | | 4 |
| Copolymer of (b) | Tg | -31 | -30 | -53 | -58 | -30 | -24 |
| (B) Aqueous emulsion | Oil resistance | G | G | G | G | G | G |
| | Water resistance | G | G | G | G | G | G |
| | Heat-sealing properties | E | E | E | G | G | G |
| | Weatherability | E | E | E | E | E | G |
| * Example 6 is outside the scope of the claimed invention | | | | | | | |

[Table 2]

| Comparative Example | | 1 | 2 | 3 | 4 |
|---|---|---|---|---|---|
| (A) | (A1) | 40 | | | |
| | (A2) | | 40 | 40 | |
| | (A'3) | | | | 1.8 |
| | | | | | |
| (b1) | (b1-1) | 75 | 75 | 50 | 25 |
| | (b1-2) | | | 20 | 30 |
| | (b1-3) | | | 10 | 20 |
| | (b1-4) | | | | 25 |
| (b2) | (b2-1) | 25 | 25 | 10 | |
| Copolymer of (b) | Tg | -28 | -28 | -36 | -31 |
| (B) Aqueous emulsion | Oil resistance | G | G | G | B |
| | Water resistance | G | G | G | B |
| | Heat-sealing properties | G | G | G | B |
| | Weatherability | B | B | B | B |

9

Production of coating material of Example 1

In a four-necked flask equipped with a stirring blade, a thermometer and a reflux condenser, 100 parts by mass of distilled water, 30 parts by mass of (A1), 1.8 parts by mass of (A'3) and 7 parts by mass of 25% ammonia water were charged. After stirring the respective components while blowing a nitrogen gas into the four-necked flask, the liquid temperature was maintained at 70°C.

Meanwhile, 25 parts by mass of (b1-1) and 30 parts by mass of (b1-2) were mixed, and an aqueous solution of 20 parts by mass of (b1-3), 25 parts by mass of (b1-4), and 30 parts by mass of ammonium persulfate and 19 parts by mass of water was prepared. About 4% by volume of the mixture and about 30% by volume of the aqueous solution were respectively charged in the four-necked flask, followed by stirring thereby allowing (b) the polymerizable unsaturated monomer to undergo emulsion polymerization. Thereafter, the remaining (about 96% by volume) mixture and the remaining (about 70% by volume) aqueous solution were simultaneously added dropwise in the four-necked flask over about 4 hours.

After completion of the dropwise addition, stirring was continued for about an hour and a half while maintaining the liquid temperature at 70°C, and then the reaction mixture thus obtained was returned to room temperature and the reaction mixture was adjusted to pH 8 by adding ammonia water to give a coating material of Example 1.

This coating material is an emulsion because of its turbidity, and is therefore an emulsion composition. The glass transition temperature (Tg) of a copolymer (excluding (A) a stabilizer) which is a solid component of (B) an aqueous emulsion shown in Table 1 is a value theoretically calculated based on a Tg of a homopolymer obtainable by homopolymerizing the respective components ((b1-1) to (b1-4)) of the unsaturated monomer (b).

The test results of the coating material of Example 1 are shown in Table 1.

Production of coating materials of Examples 2 to 6 and Comparative Examples 1 to 4 In the same manner as in Example 1, except that each component was used according to formulations shown in Tables 1 to 2, coating materials of Examples 2 to 6 and Comparative Examples 1 to 4 were produced. The test results of the coating materials thus obtained are shown in Tables 1 to 2.

The details of the evaluation results of the coating materials of Examples and Comparative Examples are as follows.

Oil Resistance Test

A kit test was performed by the following method in accordance with TAPPI T559cm-12 method.

Using a table coater, each coating material was applied on a common wood-free paper to prepare each specimen. In the test, a test solution prepared by mixing castor oil, toluene and n-heptane according to the formulation shown in Table 3 was used. The test results are expressed by a kit number and the larger number indicates more excellent oil resistance.

Since the kit test can give the oil resistance of the test paper in a short time (about 20 seconds), it has been extensively used for evaluating the oil resistance of the paper. The evaluation results have the meaning as an index of a paper surface to surface tension.

The test paper was placed on an unstained, flat black surface and one droplet of the test solution of the kit number 12 was dropped on the test paper from the height of 13 mm. Fifteen seconds after dropping (contact time: 15 seconds), the test solution dropped was removed by a clean blotting paper and the surface of the test paper contacted with the test solution was visually observed. If the surface became dark in color, the same operation is performed using the test solution of the kit number 11, and then the same operation was repeated while successively making the kit number smaller to the kit number at which the surface does not become dark in color. The first (largest) kit number at which the surface does not become dark in color is regarded as the oil resistance of the coating material.

[Table 3]

| Kit number | Castor oil Mass (g) | Toluene Volume (ml) | Heptane Volume (ml) |
|---|---|---|---|
| 1 | 969 | 0 | 0 |
| 2 | 872.1 | 50 | 50 |
| 3 | 775.2 | 100 | 100 |
| 4 | 678.3 | 150 | 150 |
| 5 | 581.4 | 200 | 200 |
| 6 | 484.5 | 250 | 250 |

(continued)

| Kit number | Castor oil Mass (g) | Toluene Volume (ml) | Heptane Volume (ml) |
|---|---|---|---|
| 7 | 387.6 | 300 | 300 |
| 8 | 290.7 | 350 | 350 |
| 9 | 193.8 | 400 | 400 |
| 10 | 96.9 | 450 | 450 |
| 11 | 0 | 500 | 500 |
| 12 | 0 | 450 | 550 |

Evaluation criteria are as follows.

G (Good): No discoloration occurred in all kits (tests) of the kit numbers 1 to 12.

B (Bad): Discoloration occurred in any one of kits (tests) of the kit numbers 1 to 12.

Water Resistance Test

Using a table coater, a coating material was applied on a common wood-free paper (or high-quality paper) so that the application amount became 10 g/m$^2$ (dry mass), and this wood-free paper was dried in a dryer at 105°C for 3 minutes to give a specimen.

After drying the coating material, the wood-free paper was cut into a circle having a diameter of 10 cm. After measuring the mass, the upper surface and the lower surface of the wood-free paper were held by top-opened circular cylindrical flasks having an inner diameter of 7 cm, followed by standing for 30 minutes in a state where 50 ml of distilled water is dropped from the upper portion.

Thereafter, the distilled water was taken out and the specimen was removed from the circular cylindrical flasks, and then the mass was measured in a state where droplets on the surface of the specimen are removed. A mass change of the specimen before and after the test was calculated and, assuming that the increment amount corresponds to a water absorption amount, the water absorption amount per unit area was calculated.

Evaluation criteria are as follows.

G (Good): Water absorption amount is less than 50 g/m$^2$ and water resistance is retained.

B (Bad): Water absorption amount is 50 g/m$^2$ or more and water resistance is not retained.

Heat-Sealing Properties Test

In the same manner as in water resistance, a specimen was produced and then cut into pieces of 25 mm $\times$ 100 mm in size. An uncoated wood-free paper was also cut into pieces of the same size. The specimen and the uncoated wood-free paper were mounted in a pressing machine with the upper portion heated at 150°C in a state where the coated surface of the specimen is in contact with the uncoated wood-free paper, followed by pressing under pressure of 0.2 MPa for 3 seconds. After curing the specimen at room temperature for 2 hours, the peel strength was measured by TENSILON and the peeled portion was visually observed and then evaluated.

Evaluation criteria are as follows.

E (Excellent): Material failure (failure of wood-free paper was recognized during peeling) of the base material occurred.

G (Good): Interfacial peeling (peeling at interface between wood-free paper and coating) occurred, and peel strength is 15 gf/25 mm or more.

O (Ordinary): Interfacial peeling occurred, and peel strength is less than 15 gf/25 mm.

B (Bad): Not bonded (sealed).

Weatherability Test

In the same manner as in water resistance, a specimen was produced and then the Lab value was measured by a color meter (Color meter ZE6000, manufactured by NIPPON DENSHOKU INDUSTRIES Co., LTD.). Thereafter, the specimen was cured under the following conditions and then the Lab (Δb) value was measured by a color meter. By comparing with the numerical value before curing, a difference in Δb value was calculated.

Light source lamp: FT-11510, FL15 (60 Hz)

Conditions: the specimen is set directly under the light source at a height of 30 cm under shading environment

Evaluation criteria are as follows.

G (Good): Difference in Δb value is less than 8.

B (Bad): Difference in Δb value is 8 or more.

As shown in Tables 1 to 2, the coating materials of Examples 1 to 6 are satisfactory in all of oil resistance, water resistance, heat-sealing properties and weatherability, and are excellent in comprehensive performance balance. Taking notice of the weatherability, the coating materials of Examples 1 to 5 exhibit excellent weatherability.

All of the coating materials of Comparative Examples 1 to 4 are inferior in weatherability. The coating materials of Comparative Examples 1 to 3 are inferior in weatherability because the content of the (meth)acrylic acid ester (b1) is 90 parts by mass or less based on 100 parts by mass of the total mass of the polymerizable unsaturated monomer (b).

All of oil resistance, water resistance, heat-sealing properties and weatherability of the coating material of Comparative Example 4 are rated "Bad" because the copolymer having a carboxyl group (A) is not used when preparing the aqueous emulsion (B).

**Industrial Applicability**

The present invention can provide a coating material which is applied on a paper surface. The coating material according to the embodiment of the present invention is applied on a paper surface to produce a paper product. Examples of the paper product include food packaging containers, paper cups and paper straws.

**Claims**

1. A coating material comprising (B) an aqueous emulsion obtainable by polymerizing (b) a polymerizable unsaturated monomer in the presence of (A) a copolymer having a carboxyl group, wherein

   the copolymer having a carboxyl group (A) has a chemical structure derived from a (meth)acrylic resin,
   the polymerizable unsaturated monomer (b) is composed only of (b1) a (meth)acrylic acid ester, and
   the copolymer having a carboxyl group (A) is blended in an amount of 10 to 50 parts by mass based on 100 parts by mass of the total mass of the polymerizable unsaturated monomer (b).

2. The coating material according to claim 1, wherein the copolymer having a carboxyl group (A) is blended in an amount of 25 to 40 parts by mass based on 100 parts by mass of the total mass of the polymerizable unsaturated monomer (b).

3. The coating material according to any one of claims 1 or 2, wherein the copolymer having a carboxyl group (A) exists together with polyvinyl alcohol.

4. Use of a coating material according to any one of claims 1 to 3, for application on a surface of a paper.

5. A paper product comprising the coating material according to any one of claims 1 to 3 applied thereon.

**Patentansprüche**

1. Beschichtungsmaterial, umfassend (B) eine wässrige Emulsion, die durch Polymerisieren (b) eines polymerisierbaren ungesättigten Monomers in der Gegenwart (A) eines Copolymers, das eine Carboxylgruppe aufweist, erhältlich ist, wobei

   das Copolymer, das eine Carboxylgruppe (A) aufweist, eine chemische Struktur aufweist, die von einem (Meth)acrylharz abgeleitet ist,
   das polymerisierbare ungesättigte Monomer (b) nur aus (b1) einem (Meth)acrylsäureester besteht und
   das Copolymer, das eine Carboxylgruppe (A) aufweist, in einer Menge von 10 bis 50 Massenteilen, basierend auf 100 Massenteilen der Gesamtmasse des polymerisierbaren ungesättigten Monomers (b), gemischt wird.

2. Beschichtungsmaterial nach Anspruch 1, wobei das Copolymer, das eine Carboxylgruppe (A) aufweist, in einer Menge von 25 bis 40 Massenteilen, basierend auf 100 Massenteilen der Gesamtmasse des polymerisierbaren ungesättigten Monomers (b), gemischt wird.

3. Beschichtungsmaterial nach einem der Ansprüche 1 oder 2, wobei das Copolymer, das eine Carboxylgruppe (A) aufweist, zusammen mit Polyvinylalkohol vorliegt.

4. Verwendung eines Beschichtungsmaterials nach einem der Ansprüche 1 bis 3 für eine Auftragung auf einer Oberfläche eines Papiers.

5. Papierprodukt, umfassend das Beschichtungsmaterial nach einem der Ansprüche 1 bis 3, das darauf aufgetragen ist.

**Revendications**

1. Matériau de revêtement comprenant (B) une émulsion aqueuse pouvant être obtenue par polymérisation (b) d'un monomère insaturé polymérisable en présence (A) d'un copolymère ayant un groupe carboxyle, dans lequel

le copolymère ayant un groupe carboxyle (A) a une structure chimique dérivée d'une résine (méth)acrylique, le monomère insaturé polymérisable (b) est composé uniquement de (b1) un ester d'acide (méth)acrylique, et le copolymère ayant un groupe carboxyle (A) est mélangé en une quantité de 10 à 50 parties en masse sur la base de 100 parties en masse de la masse totale du monomère insaturé polymérisable (b).

2. Matériau de revêtement selon la revendication 1, dans lequel le copolymère ayant un groupe carboxyle (A) est mélangé en une quantité de 25 à 40 parties en masse sur la base de 100 parties en masse de la masse totale du monomère insaturé polymérisable (b).

3. Matériau de revêtement selon l'une quelconque des revendications 1 ou 2, dans lequel le copolymère ayant un groupe carboxyle (A) existe conjointement avec de l'alcool polyvinylique.

4. Utilisation d'un matériau de revêtement selon l'une quelconque des revendications 1 à 3, pour une application sur une surface d'un papier.

5. Produit en papier comprenant le matériau de revêtement selon l'une quelconque des revendications 1 à 3 appliqué sur celui-ci.

**EP 3 976 880 B1**

## REFERENCES CITED IN THE DESCRIPTION

**Patent documents cited in the description**

- JP 2018514597 A

**Non-patent literature cited in the description**

- POLYMER HANDBOOK. John Wiley & Sons, Inc,